# EUROPEAN PATENT SPECIFICATION

(11) **EP 4 336 615 B1**
(45) Date of publication and mention of the grant of the patent: **11.11.2026**
(21) Application number: 22866486.8
(22) Date of filing: 30.08.2022
(51) Int. Cl.: H01M 10/0525, H01M 50/102, H01M 50/103, H01M 50/147, H01M 50/176, H01M 50/55, H01M 50/105, H01M 50/471

(54) **BATTERY AND ELECTRONIC PRODUCT**
BATTERIE UND ELEKTRONISCHES PRODUKT
BATTERIE ET PRODUIT ÉLECTRONIQUE

(30) Priority: 08.09.2021 CN 202111050431
(43) Date of publication of application: 13.03.2024
(73) Proprietor: Zhuhai CosMX Battery Co., Ltd., Zhuhai, Guangdong 519180 (CN)
(72) Inventor: ZHANG, Hui, Zhuhai, Guangdong 519180 (CN); WEI, Zhida, Zhuhai, Guangdong 519180 (CN); PENG, Ning, Zhuhai, Guangdong 519180 (CN)
(74) Representative: Bandpay & Greuter
(86) International application number: PCT/CN2022/115970
(87) International publication number: WO 2023/036021

(56) References cited:
- EP-A1- 1 202 371
- CN-A- 1 560 955
- CN-A- 101 536 212
- CN-A- 106 981 589
- CN-A- 107 154 469
- CN-A- 111 162 234
- CN-A- 113 745 644
- CN-U- 212 011 173
- US-A1- 2010 143 787
- US-A1- 2014 037 995
- US-A1- 2018 226 620

## Description

### TECHNICAL FIELD

The present application relates to the technical field of batteries, in particular, to a battery and an electronic product.

### BACKGROUND

In recent years, electronic products have developed rapidly, promoting the rapid development of the lithium-ion battery industry for supplying power to electronic products. The housing of the existing lithium-ion battery mainly includes steel housing, aluminum housing, aluminum-plastic film pouch, etc. Batteries with aluminum-plastic film pouch have low strength, poor compression resistance, the packaging of which being prone to damage and leakage, thereby posing high potential safety hazards. Batteries packaged with metal housings such as steel housing and aluminum housing gradually become the mainstream products of lithium-ion batteries due to their high energy density.

However, in existing batteries packaged with metal housings, the installation stability of battery cells is poor, this is prone to cause the phenomenon of shaking of battery cells, resulting in tabs connected to battery cells to be pulled by force, reducing battery quality.

US2018/0226620A1 discloses a sealed cell according to the present invention includes an angular case 50 that accommodates an electrode body. The angular case 50 includes a concave case main body 52 having an opening, and a sealing member 54. The case main body 52 has a flat surface 52a opposed to the sealing member 54, with the electrode body interposed there between, and a side wall 52b rising from the flat surface 52a. The peripheral edge portion of the opening provided in the case main body 52 and the sealing member 54 are joined to each other by seal welding. Concave and convex portions including concave portions 56a,156a recessed toward the inside of the case and convex portions $6b flush with the fat surface 52a are formed on at least one side 58a portion of end sides of the fat surface 52a.Electrode terminals 80.82 are disposed on bottom surfaces of the concave portions 56a, 156a.

### SUMMARY

The present application provides a battery and an electronic product for at least solving the technical problem of poor installation stability of a battery cell in a housing. The present invention is set out in the appended set of claims.

In order to achieve the above purpose, the present application provides a battery, including a housing, a battery cell and a sealing plate, wherein the housing is a hollow structure with an opening at one face of the housing, and the sealing plate is connected to the opening in a sealing manner; the battery cell is accommodated in an accommodation space between the housing and the sealing plate, and at least one end of the battery cell is a cell position-limiting face; at least one face of the housing is provided with a position-limiting structure; a connecting member is further disposed in the accommodation space, and the connecting member and the housing are insulated from each other.

The battery cell includes at least one first electrode piece and at least one second electrode piece, a first tab is connected to the at least one first electrode piece, a second tab is connected to the at least one second electrode piece, the first tab is electrically connected to the housing, the second tab is electrically connected to the connecting member, and the connecting member extends to an outside of the housing through a through hole in the housing.

According to the battery provide by the present application, the installation position of the battery cell in the housing may be effectively limited through the position-limiting structure, so that the installation position of the battery cell is accurate, thereby improving the installation stability of the battery cell in the housing, ensuring a good fit relationship between the battery cell and the housing through the position-limiting structure, avoiding the problem of shaking of the battery cell, and avoiding affecting the service life of the battery.

In one possible implementation, the housing includes a bottom panel and a plurality of side panels which are sequentially connected in an end-to-end manner, the side panels are all connected to an edge of the bottom panel, and at least one of the side panels is provided with the position-limiting structure.

In one possible implementation, the position-limiting structure includes a position-limiting wall and an installation wall connected to the position-limiting wall, the position-limiting wall is connected to the edge of the bottom panel, and the installation wall extends to the opening.

In one possible implementation, the position-limiting wall is a first inclined wall, one end of the first inclined wall is connected to the edge of the bottom panel, and the other end of the first inclined wall is inclined towards a direction away from a center of the housing and is connected to the installation wall; the cell position-limiting face abuts against the first inclined wall;
the first inclined wall is inclined at an angle ranging from 20° to 80° with respect to a central axis of the housing.

In one possible implementation, the position-limiting wall is a bending wall, the bending wall includes a first connecting wall and a second connecting wall which are connected with each other, and an included angle is formed between the first connecting wall and the second connecting wall, the first connecting wall is connected with the edge of the bottom panel, and the second connecting wall extends towards a direction away from a center of the housing and is connected to the installation wall;
the cell position-limiting face abuts against an inner wall of the first connecting wall.

In one possible implementation, the first connecting wall is perpendicular to the second connecting wall;
a height of the first connecting wall is from 1/4 to 1/2 of a height of the housing.

In one possible implementation, the position-limiting structure includes a second inclined wall, one end of the second inclined wall is connected to the bottom panel, and the other end of the second inclined wall is inclined towards a direction away from a center of the housing and extends to the opening; the cell position-limiting face abuts against the second inclined wall;
the second inclined wall is inclined at an angle ranging from 20° to 80° with respect to a central axis of the housing.

In one possible implementation, the housing further includes a skirt-edge, the skirt-edge is connected with all of the plurality of side panels, and the sealing plate is connected with the skirt-edge by welding; a hot-melting depth for welding the skirt-edge and the sealing plate is less than or equal to a thickness of the skirt-edge.

In one possible implementation, a polarity of the at least one first electrode piece is opposite to that of the at least one second electrode piece, the battery cell is provided with a stacking region, and the at least one first electrode piece and the at least one second electrode piece in the stacking region are stacked on top of each other; the at least one first electrode piece and the at least one second electrode piece in the stacking region are parallel to a plane in which the bottom panel lies and/or a plane in which the sealing plate lies;
a separator is further disposed between the at least one first electrode piece and the at least one second electrode piece.

In one possible implementation, the first tab is electrically connected to the at least one first electrode piece through the cell position-limiting face, and the second tab is electrically connected to the at least one second electrode piece through the cell position-limiting face;
a reinforcement is disposed on the installation wall, the first tab is electrically connected to the reinforcement, an insulating member is disposed between the first tab and the installation wall, and an insulating member is disposed between the second tab and the installation wall, and a through hole is formed in the installation wall; the connecting member extends to an outside of the installation wall through the through hole, and the connecting member and the installation wall are insulated from each other.

In one possible implementation, the first tab is electrically connected to the at least one first electrode piece through the cell position-limiting face, and the second tab is electrically connected to the at least one second electrode piece through the cell position-limiting face;
a reinforcement is disposed on the second inclined wall, the first tab is electrically connected to the reinforcement, an insulating member is disposed between the first tab and the second inclined wall, and an insulating member is disposed between the second tab and the second inclined wall, and a through hole is disposed in the second inclined wall; the connecting member extends to an outside of the second inclined wall through the through hole, and the connecting member and the second inclined wall are insulated from each other.

In one possible implementation, both the housing and the sealing plate are made of metal, and a thickness of a panel used for the housing and the sealing plate is 10µm to 150µm;
the housing is formed by stamping.

In one possible implementation, the connecting member includes a connecting sheet and a connecting post which are electrically connected with each other, the connecting sheet is fixedly connected to the housing through an insulating adhesive layer, and the connecting post and the housing are insulated from each other through at least two insulating pads; the connecting post extends to an outside of the housing through the through hole.

The present application further provides an electronic product including the battery.

According to the battery provided by the present application, the position-limiting wall is a first inclined wall, and the first inclined wall is inclined towards a direction away from a center of the housing, so that an installation space is formed between the installation wall and the battery cell, and the installation space may be used for installing a reinforcement and a connecting member on the installation wall, thereby avoiding interference between the reinforcement or the connecting member and the battery cell.

According to the battery provided by the present application, the position-limiting wall is a bending wall, so that an installation space is formed below the second connecting wall, that is, between the installation wall and the battery cell, and the installation space may be used for installing a reinforcement and a connecting member on the installation wall, thereby avoiding interference between the reinforcement or the connecting member and the battery cell.

According to the battery provided by the present application, the position-limiting structure includes a second inclined wall, so that an installation space is formed between the second inclined wall and the battery cell, and the installation space may be used for installing a reinforcement and a connecting member on the second inclined wall, thereby avoiding interference between the reinforcement or the connecting member and the battery cell.

According to the battery provided by the present application, when the position-limiting wall is a first inclined wall, the position of the battery cell in the housing is limited by the blocking effect of the first inclined wall. When the position-limiting wall is a bending wall, the position of the battery cell in the housing is limited by the mutual abutment of the inner wall of the first connecting wall and the battery cell. When the position-limiting structure includes a second inclined wall, the position of the battery cell in the housing is limited by the second inclined wall. Therefore, the battery cell can be limited from shaking in the housing, facilitating to ensure the installation stability of the battery cell, avoiding the second tab and/or the first tab to be pulled by force due to the shaking of the battery cell to affect the service life.

In addition to the technical problems solved by embodiments of the present application, the technical features constituting the technical solutions, and the beneficial effects brought by the technical features of these technical solutions as described above, other technical problems that can be solved by the battery and electronic product provided by embodiments of the present application, other technical features contained in the technical solutions, and the beneficial effects brought by these technical features, will be further described in detail in the description of embodiments.

### BRIEF DESCRIPTION OF DRAWINGS

To describe the technical solutions in embodiments of the present application or in the prior art more clearly, the following briefly introduces the accompanying drawings needed for describing the embodiments or the prior art. Apparently, the accompanying drawings in the following description illustrate merely some embodiments of the present application, and persons of ordinary skill in the art may still derive other drawings from these accompanying drawings without creative effort.
FIG. 1 is a schematic diagram of a three-dimensional structure of a battery according to an embodiment of the present application.
FIG. 2 is an exploded view of a battery according to an embodiment of the present application.
FIG. 3 is a schematic diagram of another three-dimensional structure of a battery according to an embodiment of the present application.
FIG. 4 is a front view of a battery according to a first embodiment of the present application.
FIG. 5 is an exploded view of the battery according to the first embodiment of the present application.
FIG. 6 is a right view of the battery according to the first embodiment of the present application.
FIG. 7 is a cross-sectional view along A-A line of FIG. 6 of the battery according to the first embodiment of the present application.
FIG. 8 is a front view of a battery according to a second embodiment of the present application.
FIG. 9 is a right view of the battery according to the second embodiment of the present application.
FIG. 10 is a cross-sectional view along B-B line of FIG. 8 of the battery according to the second embodiment of the present application.
FIG. 11 is a top view of the battery according to the second embodiment of the present application.
FIG. 12 is a front view of a battery according to a third embodiment of the present application.
FIG. 13 is a right view of the battery according to the third embodiment of the present application.
FIG. 14 is a cross-sectional view along C-C line of FIG. 13 of the battery according to the third embodiment of the present application.
FIG. 15 is a top view of the battery according to the third embodiment of the present application.
FIG. 16 is a schematic diagram of a three-dimensional structure of the battery according to the third embodiment of the present application.

### Description of reference numerals:

10-housing;
11-bottom panel;
12-side panel;
121-first side plate;
122-second side plate;
123-third side plate;
124-fourth side plate;
13-skirt-edge;
14-opening;
15-accommodation space;
16-liquid injection hole;
20-battery cell;
21-first electrode piece;
22-second electrode piece;
23-cell position-limiting face;
30-sealing plate;
40-reinforcement;
50-position-limiting structure;
60-position-limiting wall;
61-first inclined wall;
62-bending wall;
621-first connecting wall;
622-second connecting wall;
70-installation wall;
71-installation space;
80-second inclined wall;
90-connecting member.

### DESCRIPTION OF EMBODIMENTS

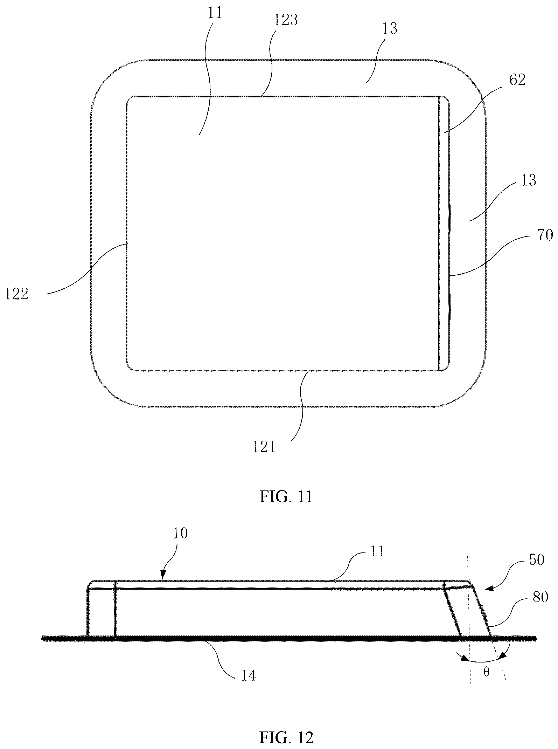

To make the objectives, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art based on embodiments of the present application without creative effort shall fall within the protection scope of the present application. The embodiments of FIGS. 11-16 are not according to the invention and are present for illustration purposes only.

Due to the impact of factors such as errors in battery cell processing and the like, there is a certain space after a battery cell is installed in a steel housing of a battery having the steel housing. The battery cell can be shaken in the space. The shaking of the battery cell is not conducive to the transportation and circulation of the battery, and the shaking of the battery cell also causes tabs to be pulled by force, resulting in quality reduction of the finished battery, and even affecting the service life of the battery in severe cases.

In view of the above background, according to the battery provided by the present application, a battery cell is accommodated in an accommodation space between a housing and a sealing plate; and at least one side of the housing is provided with a position-limiting structure, which is conducive to limiting the position of the internal cell, plays a certain role in fixing the battery cell, and improves the installation stability of the battery cell.

A battery and an electronic product provided by embodiments of the present application are described below with reference to the accompanying drawings.

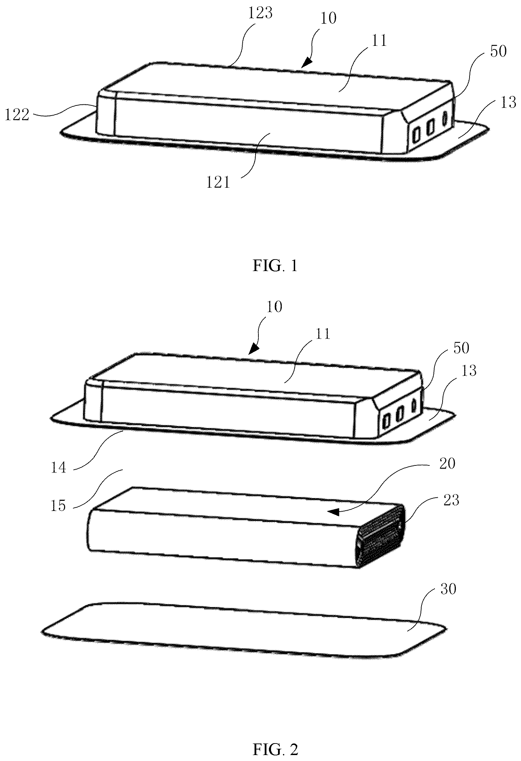

Referring to FIG. 1 and FIG. 2, the present application provides a battery, including a housing 10, a battery cell 20, and a sealing plate 30, where the housing 10 is a hollow structure with an opening 14 at one face of the housing 10, the sealing plate 30 is connected to the opening 14 in a sealing manner, the battery cell 20 is accommodated in an accommodation space 15 between the housing 10 and the sealing plate 30, and a connecting member 90 is further disposed in the accommodation space 15. The connecting member 90 and the housing 10 are insulated from each other.

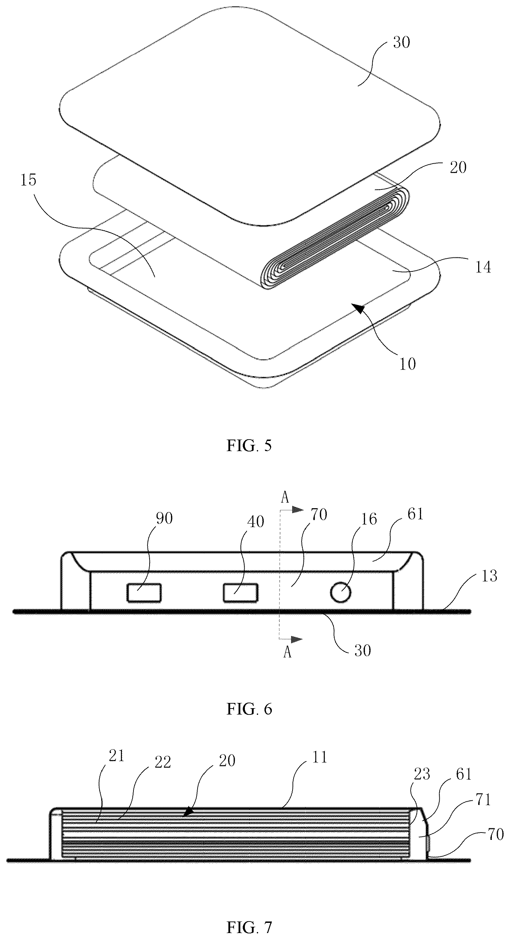

Referring to FIG. 2 and FIG. 7, the battery cell 20 includes at least one first electrode piece 21 and at least one second electrode piece 22, a first tab is connected to the at least one first electrode piece 21, a second tab is connected to the at least one second electrode piece 22, the first tab is electrically connected to the housing 10, and the second tab is electrically connected to the connecting member 90. The connecting member 90 extends to an outside of the housing 10 through a through hole in the housing 10, at least one end of the battery cell 20 is a cell position-limiting face 23, and at least one face of the housing 10 is provided with a position-limiting structure 50.

According to the battery provided by the present application, at least one face of the housing 10 is provided with the position-limiting structure 50, so that the installation position of the battery cell 20 in the housing 10 can be effectively limited, making the installation position of the battery cell 20 accurate, improving the installation stability of the battery cell 20 in the housing 10, and ensuring a good fit between the battery cell 20 and the housing 10 through the position-limiting structure 50, avoiding the problem of shaking of the battery cell 20 to affect the service life of the battery.

It is easily understood that a polarity of the at least one first electrode piece 21 is opposite to that of the at least one second electrode piece 22, that is, one of the first electrode piece 21 and the second electrode piece 22 is a positive electrode piece, and the other of the first electrode piece 21 and the second electrode piece 22 is a negative electrode piece. A separator is further disposed between the at least one first electrode piece 21 and the at least one second electrode piece 22 to separate the first electrode piece 21 from the second electrode piece 22, preventing the first electrode piece 21 from contacting with the second electrode piece 22 to cause a short circuit.

The battery cell 20 is provided with a stacking region, the at least one first electrode piece 21 and the at least one second electrode piece 22 in the stacking region are stacked on top of each other, and the at least one first electrode piece 21 and the at least one second electrode piece 22 in the stacking region are parallel to a plane in which a bottom panel 11 lies and/or a plane in which the sealing plate 30 lies. This can improve the energy density of the battery.

It is easily understood that when the battery cell 20 is a rolled cell, the flat battery cell 20 has two arc-shaped sides, the region between the two arc-shaped sides is the stacking region, and the first electrode piece 21 and the second electrode piece 22 in the stacking region are parallel to each other.

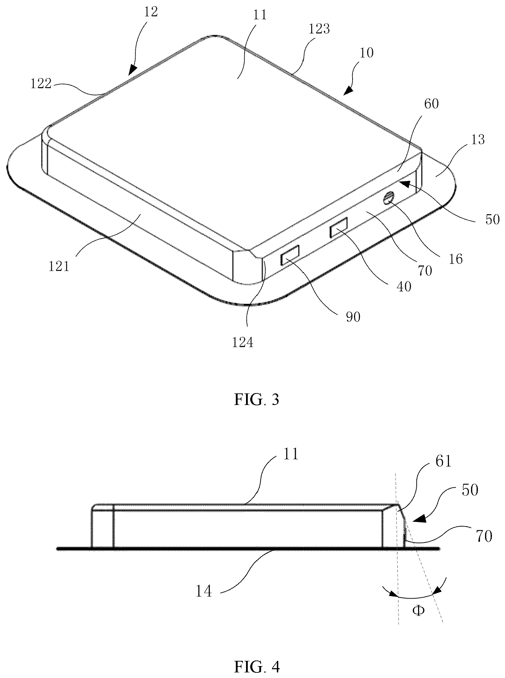

Referring to FIG. 2 and FIG. 3, the housing 10 includes a bottom panel 11 and a plurality of side panels 12 which are sequentially connected in an end-to-end manner. The plurality of side panels 12 are connected to an edge of the bottom panel 11, and at least one of the side panels 12 is provided with the position-limiting structure *50.*

Where, the plurality of side panels 12 may be four side panels 12, and the four side panels 12 may be a first side plate 121, a second side plate 122, a third side plate 123, and a fourth side plate 124 respectively, where the first side plate 121, the second side plate 122, the third side plate 123, and the fourth side plate 124 are sequentially connected in an end-to-end manner and are all connected to the edge of the bottom panel 11. The fourth side plate 124 is provided with the position-limiting structure 50.

Each of the housing 10 and the sealing plate 30 is made of a metal material, such as stainless steel, aluminum, or other metal materials. The materials of the housing 10 and the sealing plate 30 may be the same or different. Using metal materials makes the packaging of the battery easier and the energy density of the battery has almost no loss.

In one possible implementation, a thickness of a panel used for the housing 10 and the sealing plate 30 is 10µm to 150µm, so that the housing 10 and the sealing plate 30 have sufficient strength to protect the battery cell 20. However, too thick material may increase the volume of the battery, affecting the energy density of the battery, increasing the weight of the battery, and making it inconvenient to carry. The housing 10 is formed by stamping, which is convenient to processing and can play a role in fixing the battery cell 20.

In one possible implementation, for example, the housing 10 may be formed by stamping a stainless steel with a thickness of 10µm, 50µm, 70µm or 100µm, and the sealing plate 30 may be formed by stamping a stainless steel with a thickness of 10µm, 50µm, 70µm or 100µm.

In one possible implementation, the bottom panel 11, the first side plate 121, the second side plate 122, the third side plate 123 and the fourth side plate 124 are integrally formed, and the first side plate 121, the second side plate 122 and the third side plate 123 are all perpendicularly connected to the bottom panel 11.

It is easily understood that the first side plate 121, the second side plate 122 and the third side plate 123 may be roundly and smoothly connected to the edge of the bottom panel 11.

In one possible implementation, the bottom plate 11 may be square or rectangular.

In one possible implementation, the housing 10 further includes a skirt-edge 13 at an edge of the opening 14; the skirt-edge 13 is connected to all of the first side plate 121, the second side plate 122, the third side plate 123 and the fourth side plate 124, and the cover plate 30 is connected to the skirt-edge 13.

In one possible implementation, the skirt-edge 13 may be roundly and smoothly connected to all of the first side plate 121, the second side plate 122 and the third side plate 123, and the first side plate 121, the second side plate 122 and the third side plate 123 are all perpendicular to the skirt-edge 13.

The sealing plate 30 is welded on the skirt-edge 13, and a hot-melting depth for welding the skirt-edge edge 13 and the sealing plate 30 is less than or equal to a thickness of the skirt-edge edge 13, so that the sealing plate 30 is smoothly and firmly fixed on the skirt-edge edge 13, obtaining a good welding effect.

In this implementation, the sealing plate 30 is welded on the skirt-edge 13 by laser welding, which meets the welding requirement for high precision. Of course, in other implementations, other welding methods such as ultrasonic welding may also be used.

### Example 1

Referring to FIG. 3 and FIG. 4, the position-limiting structure 50 includes a position-limiting wall 60 and an installation wall 70 connected to the position-limiting wall 60, where the installation wall 70 is connected to one end of the position-limiting wall 60, the position-limiting wall 60 is connected to the edge of the bottom plate 11, and the installation wall 70 extends to the opening 14.

In one possible implementation, referring to FIG. 4 and FIG. 5, the installation wall 70 may extend longitudinally in a direction perpendicular to the bottom panel 11 to the opening 14.

In this Example, referring to FIG. 6 and FIG. 7, the position-limiting wall 60 is a first inclined wall 61, one end of the first inclined wall 61 is connected to the edge of the bottom panel 11, the other end of the first inclined wall 61 is inclined towards a direction away from a center of the housing 10 and is connected to the installation wall 70, and the cell position-limiting face 23 abuts against the first inclined wall 61.

In one possible implementation, the cell position-limiting face 23 abuts against a face of the first inclined wall 61 close to the battery cell 20. Since the first inclined wall 61 is inclined, the position of the battery cell 20 is limited through the blocking effect of the first inclined wall 61, so that the installation position of the battery cell 20 in the housing 10 is accurate. The situation in which the cell position-limiting face 23 and the first inclined wall 61 are abutted against each other limits the battery cell 20 from shaking in the housing 10.

The first tab is electrically connected to at least one first electrode piece 21 through the cell position-limiting face 23, and the second tab is electrically connected to at least one second electrode piece 22 through the cell position-limiting face 23.

A reinforcement 40 is disposed on the installation wall 70. The first tab is electrically connected to the reinforcement 40. An insulating member is disposed between the first tab and the installation wall 70, and an insulating member is disposed between the second tab and the installation wall 70. A through hole is formed in the installation wall 70, the through hole penetrates through inner and out sides of the installation wall 70, and the connecting member 90 extends to an outside of the installation wall 70 through the through hole. The connecting member 90 and the installation wall 70 are insulated from each other.

One end of the first inclined wall 61 is connected to the edge of the bottom panel 11, and the other end of the first inclined wall 61 is inclined towards a direction away from the center of the housing 10, so that an installation space 71 is formed between the installation wall 70 and the battery cell 20. The installation space 71 is located in the accommodation space 15. The installation space 71 may be used for installing the reinforcement 40 and the connecting member 90 on the installation wall 70, so that the reinforcement 40 and the connecting member 90 are prevented from interfering with the battery cell 20.

In one possible implementation, the first tab connected to the battery cell 20 is electrically connected to the reinforcement 40, and the second tab connected to the battery cell 20 is electrically connected to the connecting member 90. The reinforcement 40 may be a reinforcing sheet, and the reinforcement 40 is used for increasing local mechanical strength of the housing 10, thereby facilitating the series connection of a plurality of batteries to achieve the purpose of increasing capacity and pressure.

In one possible implementation, referring to FIG. 4 and FIG. 7, the first inclined wall 61 is inclined at an angle Φ ranging from 20° to 80° with respect to a central axis of the housing 10.

Referring to FIG. 4 and FIG. 6, it is easily understood that if the inclination angle Φ of the first inclined wall 61 with respect to the central axis of the housing 10 is too small, the installation space 71 formed between the installation wall 70 and the battery cell 20 may be too small, which is easy to cause interference between the reinforcement 40 as well as the connecting member 90 and the battery cell 20. On the contrary, if the inclination angle Φ of the first inclined wall 61 with respect to the central axis of the housing 10 is too large, the volume of the housing 10 may be too large, which is not conducive to improving the energy density of the battery.

In one possible implementation, the inclination angle Φ of the first inclined wall 61 with respect to the central axis of the housing 10 may be 20°, 30°, 45°, 60°, 70°, 80°, etc. In this way, it may be secured that a sufficient installation space 71 is formed between the installation wall 70 and the battery cell 20, and the volume of the housing 10 may be prevented from being too large, so that there is almost no loss in the energy density of the battery.

It is easily understood that the central axis of the housing 10 is located at the geometric center of the housing 10 and is perpendicular to the plane in which the bottom panel 11 lies.

In one possible implementation, the connecting member 90 includes a connecting sheet and a connecting post which are electrically connected to each other. The connecting sheet is fixedly connected to the housing 10 through an insulating adhesive layer. The connecting post and the housing 10 are insulated from each other through at least two insulating pads, and the connecting post extends to an outside of the housing 10 through the through hole. The two insulating pads are located on two sides of the installation wall 70 respectively to completely insulate the connecting post from the housing 10.

In one possible implementation, the connecting sheet and the connecting post may be connected by welding, and the connecting post may be a rivet or a polar post.

In this Example, referring to FIG. 3 and FIG. 6, the installation wall 70 is roundly and smoothly connected to the skirt-edge 13, and the installation wall 70 is perpendicular to the skirt-edge 13.

It is easily understood that one of the first tab and the second tab is a positive tab, the other of the first tab and the second tab is a negative tab, the positive tab is electrically connected to the positive electrode piece, and the negative tab is electrically connected to the negative electrode piece.

Referring to FIG. 5 and FIG. 6, a liquid injection hole 16 is further formed in the installation wall 70, and the liquid injection hole 16 is communicated with the accommodation space 15. An electrolyte solution is injected into the accommodation space 15 through the liquid injection hole 16, and the battery cell 20 is immersed in the electrolyte solution. The reinforcement 40, the connecting post and the injection hole 16 may be provided side-by-side spaced apart from each other.

### Example 2

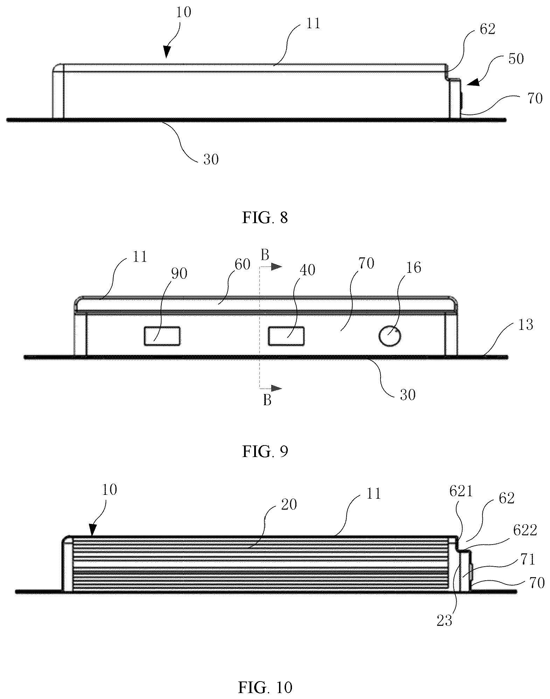

Referring to FIG. 4 and FIG. 8, the position-limiting structure 50 includes a position-limiting wall 60 and an installation wall 70 connected to the position-limiting wall 60, where the installation wall 70 is connected to one end of the position-limiting wall 60, the position-limiting wall 60 is connected to the edge of the bottom plate 11, and the installation wall 70 longitudinally extends to the opening 14.

In this Example, referring to FIG. 9 and FIG. 10, the position-limiting wall 60 is a bending wall 62, and the bending wall 62 includes a first connecting wall 621 and a second connecting wall 622 which are connected with each other. An included angle is formed between the first connecting wall 621 and the second connecting wall 622, and the first connecting wall 621 is connected to the edge of the bottom plate 11, and the second connecting wall 622 extends towards a direction away from a center of the housing 10 and is connected to the installation wall 70. The cell position-limiting face 23 abuts against an inner wall of the first connecting wall 621.

The position of the battery cell 20 is limited by the inner wall of the first connecting wall 621, so that the installation position of the battery cell 20 in the housing 10 is accurate, thereby limiting the battery cell 20 from shaking in the housing 10, which is conductive to ensure the stable installation of the battery cell 20.

A reinforcement 40 is disposed on the installation wall 70. The first tab is electrically connected to the reinforcement 40. An insulating member is disposed between the first tab and the installation wall 70, and an insulating member is disposed between the second tab and the installation wall 70. A through hole is formed in the installation wall 70, the through hole penetrates through inner and out sides of the installation wall 70, and the connecting member 90 extends to outside of the installation wall 70 through the through hole. The connecting member 90 and the installation wall 70 are insulated from each other.

The second connecting wall 622 extends towards the direction away from the center of the housing 10 to connect with the installation wall 70, so that an installation space 71 is formed below the second connecting wall 622, i.e., between the installation wall 70 and the battery cell 20. The installation space 71 may be used for installing the reinforcement 40 and the connecting member 90 on the installation wall 70, so that the reinforcement 40 and the connecting member 90 are prevented from interfering with the battery cell 20.

In one possible implementation, the included angle between the first connecting wall 621 and the second connecting wall 622 may be 90°, that is, the first connecting wall 621 and the second connecting wall 622 are perpendicular to each other. The first connecting wall 621 and the bottom panel 11 are perpendicular to each other, and the first connecting wall 621 may be roundly and smoothly connected to the edge of the bottom panel 11.

In one possible implementation, a height of the first connecting wall 621 is from 1/4 to 1/2 of a height of the housing 10. This allows sufficient height space for the installation wall 70 to ensure that the installation wall 70 has sufficient height space for installing the reinforcement 40 and the connecting member 90.

In one possible implementation, the height of the first connecting wall 621 may be 1/4, 1/2 or 1/3 of the height of the housing 10, so that the installation wall 70 has a sufficient height space to facilitate the installation of the reinforcement 40 and the connecting member 90 on the installation wall 70.

Referring to FIG. 9 and FIG. 10, the first tab is electrically connected to at least one first electrode piece 21 through the cell position-limiting face 23, and the second tab is electrically connected to at least one second electrode piece 22 through the cell position-limiting face 23.

In one possible implementation, the connecting member 90 is electrically connected to the second tab, and the first tab is electrically connected to the reinforcement 40. The reinforcement 40 may be a reinforcing sheet, and the reinforcement 40 is used for increasing local mechanical strength of the housing 10 and increasing local wall thickness of the housing 10, thereby facilitating the series connection of a plurality of batteries to achieve the purpose of increasing capacity and pressure.

In one possible implementation, the connecting post may be a rivet or a polar post.

In one possible implementation, the insulating member disposed between the first tab and the installation wall 70 may be an insulating pad, which has the effect of insulating the first tab from the installation wall 70. The insulating member disposed between the second tab and the installation wall 70 may be an insulating pad, which has the effect of insulating insulate the second tab from the installation wall 70.

In one possible implementation, the connecting member 90 includes a connecting sheet and a connecting post which are electrically connected to each other. The connecting sheet is fixedly connected to the housing 10 through an insulating adhesive layer. The connecting post and the housing 10 are insulated from each other through at least two insulating pads, and the connecting post extends to outside of the housing 10 through the through hole. The two insulating pads are located on two sides of the installation wall 70 respectively to completely insulate the connecting post from the housing 10.

In this Example, referring to FIG. 11, the installation wall 70 is roundly and smoothly connected to the skirt-edge 13, and the installation wall 70 is perpendicular to the skirt-edge 13. The embodiments of FIG. 11 are not according to the invention and are present for illustration purposes only.

Referring to FIG. 5 and FIG. 9, a liquid injection hole 16 is further formed in the installation wall 70, and the liquid injection hole 16 is communicated with the accommodation space 15. An electrolyte solution is injected into the accommodation space 15 through the liquid injection hole 16, and the battery cell 20 is immersed in the electrolyte solution. The reinforcement 40, the connecting post and the injection hole 16 may be provided side-by-side spaced apart from each other.

### Example 3

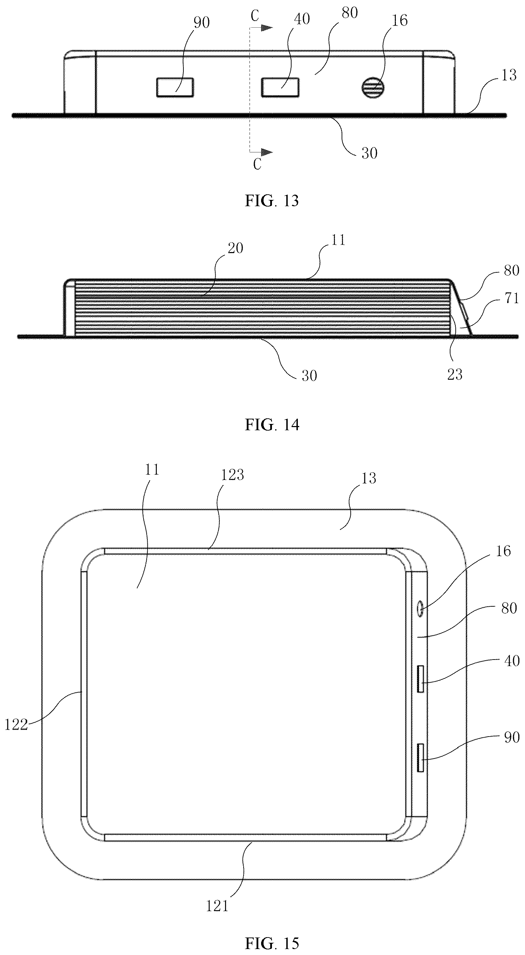

In this Example, referring to FIG. 12 and FIG. 14, the position-limiting structure 50 includes a second inclined wall 80, one end of the second inclined wall 80 is connected to the bottom panel 11, the other end of the second inclined wall 80 is inclined towards a direction away from a center of the housing 10 and extends to the opening 14, and the cell position-limiting face 23 abuts against the second inclined wall 80.

In one possible implementation, the cell position-limiting face 23 abuts against one end of the second inclined wall 80 close to the battery cell 20, and the battery cell 20 is limited by the second inclined wall 80, so that the installation position of the battery cell 20 in the housing 10 is accurate, thereby preventing the battery cell 20 from shaking in the housing 10, this is conductive to ensure the stable installation of the battery cell 20.

Referring to FIG. 13 and FIG. 14, the second inclined wall 80 may be roundly and smoothly connected to the bottom panel 11. Referring to FIG. 12 and FIG. 14, the second inclined wall 80 is inclined at an angle θ ranging from 20° to 80° with respect to a central axis of the housing 10. The inclined structure of the second inclined wall 80 facilitates the formation of an installation space 71 between the second inclined wall 80 and the battery cell 20. The installation space 71 may be used for installing the reinforcement 40 and the connecting member 90 on the second inclined wall 80, so that the reinforcement 40 and the connecting member 90 are prevented from interfering with the battery cell 20.

The inclination angle θ of the second inclined wall 80 with respect to the central axis of the housing 10 affects the size of the installation space 71 formed between the second inclined wall 80 and the battery cell 20. It is easily understood that if the inclination angle θ of the second inclined wall 80 with respect to the central axis of the housing 10 is too small, the installation space 71 formed between the second inclined wall 80 and the battery cell 20 may be too small, which is easy to cause interference between the reinforcement 40 as well as the connecting member 90 and the battery cell 20. On the contrary, if the inclination angle θ of the second inclined wall 80 with respect to the central axis of the housing 10 is too large, the volume of the housing 10 may be too large, which is not conducive to improving the energy density of the battery.

In one possible implementation, the inclination angle θ of the second inclined wall 80 with respect to the central axis of the housing 10 may be 20°, 30°, 45°, 60°, 70°, 80°, etc. In this way, it may be secured that a sufficient installation space 71 is formed between the second inclined wall 80 and the battery cell 20, and the volume of the housing 10 may be prevented from being too large, so that there is almost no loss in the energy density of the battery.

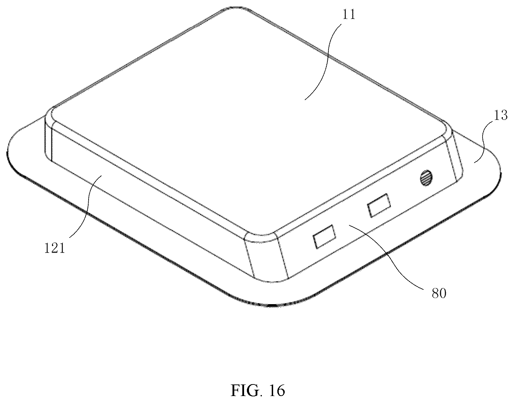

In this Example, referring to FIG. 15 and FIG. 16, the second inclined wall 80 is roundly and smoothly connected to the skirt-edge 13, and there is an inclination angle between the second inclined wall 80 and the skirt-edge 13.

Referring to FIG. 13 and FIG. 14, the first tab is electrically connected to at least one first electrode piece 21 through the cell position-limiting face 23, and the second tab is electrically connected to at least one second electrode piece 22 through the cell position-limiting face 23.

In one possible implementation, a reinforcement 40 is disposed on the second inclined wall 80. The first tab is electrically connected to the reinforcement 40. An insulating member is disposed between the first tab and the second inclined wall 80, and an insulating member is disposed between the second tab and the second inclined wall 80.

In this Example, a through hole is formed in the second inclined wall 80, the through hole penetrates through inner and outer sides of the second inclined wall 80, and the connecting member 90 extends to an outside of the second inclined wall 80 through the through hole. The connecting member 90 and the second inclined wall 80 are insulated from each other.

In one possible implementation, the insulating member disposed between the first tab and the second inclined wall 80 may be an insulating pad which has the effect of insulating the first tab from the second inclined wall 80. The insulating member disposed between the second tab and the second inclined wall 80 may be an insulating spacer, which has the effect of insulating the second tab from the second inclined wall 80.

Referring to FIG. 13 and FIG. 14, the connecting member 90 includes a connecting sheet and a connecting post which are electrically connected to each other. The connecting sheet is fixedly connected to the housing 10 through an insulating adhesive layer. The connecting post and the housing 10 are insulated from each other through at least two insulating pads, and the connecting post extends to an outside of the housing 10 through the through hole.

Two insulating pads are located on two sides of the installation wall 70 respectively to completely insulate the connecting post from the housing 10.

In one possible implementation, the connecting post may be a rivet or a pole post. The reinforcement 40 may be a reinforcing sheet for increasing local mechanical strength of the housing 10, so as to facilitate connecting a plurality of batteries in series to achieve the purpose of increasing capacity and pressure.

A liquid injection hole 16 is further formed in the second inclined wall 80, and the liquid injection hole 16 is communicated with the accommodation space 15. An electrolyte solution is injected into the accommodation space 15 through the liquid injection hole 16, and the battery cell 20 is immersed in the electrolyte solution. The reinforcement 40, the connecting post and the injection hole 16 may be provided side-by-side spaced apart from each other.

According to the battery provided by the embodiments of the present application, with the provision of the position-limiting structure 50, the installation position of the battery cell 20 in the housing 10 is accurate, and the battery cell 20 is prevented from shaking in the housing 10 to cause the second tab and/or the first tab to be pulled and damaged, thereby improving the accuracy of the installation position of the battery cell 20, and ensuring the stable installation of the battery cell 20.

In one possible implementation, the connecting post may be insulated from the housing 10 by an insulating washer so as to become a positive output end of the battery, and the reinforcement 40 becomes a negative output end of the battery.

During processing, the housing 10 is formed by stamping; the reinforcement 40 is welded; the second tab is connected through the connecting member 90; the liquid injection hole 16 is processed; then the battery cell 20 is placed in the housing 10; the first tab is connected with the reinforcement 40 by welding; the housing 10 is positioned and is in overlapping connection with the sealing plate 30; and the skirt-edge 13 is welded with the sealing plate 30 by laser. After the welding is completed, excess material is cut by laser at a certain distance away from an outside of the weld seam between the skirt-edge 13 and the sealing plate 30, and burrs after the cutting is controlled to be less than 30µm. Then, the battery after the cutting is placed into an oven to bake for a certain time. After about 8 hours, and the moisture in the battery is discharged outward through the liquid injection hole 16. Then, a certain amount of an electrolyte solution is injected into the accommodation space 15 through the liquid injection hole 16. The liquid injection hole 16 is cleaned, the dirt is cleaned by laser, and finally, a sealing member is welded on the liquid injection hole 16 by laser welding. The sealing piece may be a sheet to block and seal the liquid injection hole 16 to prevent the electrolyte solution from leaking from the liquid injection hole 16.

The present application further provides an electronic product, including the above battery. The battery is used for power supply.

The electronic product provided by the present application includes, but is not limited to, a mobile terminal device, a medical device and other electronic products requiring the above battery.

In one possible implementation, the electronic product provided by the present application is a mobile terminal, for example, a mobile phone, a tablet computer, a learning machine, etc.

It should be noted here that the numerical values and the ranges of the numerical values involved in the present application are approximate values. Due to the influence of manufacturing processes, there may be a certain range of errors, which may be considered as negligible by those skilled in the art.

In the description of the present application, it should be understood that the terms "center", "length", "width", "thickness", "top", "bottom", "upper", "lower", "left", "right", "front", "rear", "vertical", "horizontal", "inner", "outer", "axial", "circumferential" and the like used to indicate orientation or positional relationship is based on the orientation or positional relationship shown in the accompanying drawings, which are merely intended to facilitate the description of the present application and to simplify the description, and are not intended to indicate or imply that the locations or elements referred to must have a particular orientation, or be of a particular construction or operation, and is therefore not to be construed as position-limiting the present application.

Furthermore, the terms "first" and "second" are used for descriptive purposes only and are not to be construed as indicating or implying relative importance or as implying the number of technical features indicated. Thus, the features defined with "first" or "second" may be explicitly or implicitly defined as including one or more of the features. In the description of this application, "a plurality of" means at least two, such as two, three, etc., unless otherwise clearly specified and defined.

In the present application, unless otherwise clearly specified and defined, the terms "mounted to", "connected to", "coupled to", "fixed to" and the like should be understood broadly. For example, connection can be a fixed connection, a detachable connection, or an integrally connection; connection can be a mechanical connection, an electrical connection or in communication with each other; connection can be a direct connection, or an indirect connection through an intermediary, an interconnection between two components or an interactive relationship between two components. For those of ordinary skill in the art, the specific meanings of the above terms in the present application can be understood through specific situations.

In the present application, unless otherwise clearly specified and defined, a first feature being "over" or "under" a second feature may include the first feature being directly connected with the second feature, and may also include the first feature being not directly connected with the second feature but being connected via another feature between them. Also, a first feature being "over", "above" or "on top of" a second feature may include the first feature being directly above and diagonally above the second feature, or merely indicates that the first feature is higher than the second feature. A first feature being "under", "below" or "beneath" a second feature may include the first feature being directly under and diagonally under the second feature, or merely indicates that the first feature is lower than the second feature.

Finally, it should be noted that the above embodiments are only used to illustrate the technical solutions of the present application, not to limit them.

## Claims

1. A battery, **characterized by** comprising a housing (10), a battery cell (20) and a sealing plate (30), wherein the housing (10) is a hollow structure with an opening (14) at one face of the housing (10), and the sealing plate (30) is connected to the opening (14) in a sealing manner; the battery cell (20) is accommodated in an accommodation space (15) between the housing (10) and the sealing plate (30), and at least one end of the battery cell (20) is a cell position-limiting face (23); at least one face of the housing (10) is provided with a position-limiting structure (50), the cell position-limiting face (23) abuts against the position-limiting structure (50) to avoid shaking of the battery cell (20); a connecting member (90) is further disposed in the accommodation space (15), and the connecting member (90) and the housing (10) are insulated from each other;
the battery cell (20) comprises at least one first electrode piece (21) and at least one second electrode piece (22), a first tab is connected to the at least one first electrode piece (21), a second tab is connected to the at least one second electrode piece (22), the first tab is electrically connected to the housing (10), the second tab is electrically connected to the connecting member (90), and the connecting member (90) extends to an outside of the housing (10) through a through hole in the housing (10);
wherein the housing (10) comprises a bottom panel (11), and a plurality of side panels (12) which are sequentially connected in an end-to-end manner, wherein the plurality of side panels (12) are all connected to an edge of the bottom panel (11), and at least one of the side panels (12) is provided with the position-limiting structure (50);
wherein the position-limiting structure (50) comprises a position-limiting wall (60) and an installation wall (70) connected to the position-limiting wall (60), the position-limiting wall (60) is connected to an edge of the bottom panel (11), and the installation wall (70) extends to the opening (14), the position-limiting wall (60) is a first inclined wall (61) or the position-limiting wall (60) is a bent wall (62);
wherein a reinforcement (40) is disposed on the installation wall (70) to increase local mechanical strength of the housing (10), the first tab is electrically connected to the reinforcement (40);
wherein one end of the first inclined wall (61) is connected to the edge of the bottom panel (11), and the other end of the first inclined wall (61) is inclined towards a direction away from a center of the housing (10) and is connected to the installation wall (70); the cell position-limiting face (23) abuts against the first inclined wall (61);
the first inclined wall (61) is inclined at an angle ranging from 20° to 80° with respect to a central axis of the housing (10);
wherein the bent wall (62) comprises a first connecting wall (621) and a second connecting wall (622) which are connected with each other, and an included angle is formed between the first connecting wall (621) and the second connecting wall (622); the first connecting wall (621) is connected to the edge of the bottom panel (11), and the second connecting wall (622) extends towards a direction away from a center of the housing (10) and is connected to the installation wall (70);
the cell position-limiting face (23) abuts against an inner wall of the first connecting wall (621);
wherein the battery cell (20) is provided with a stacking region, and the at least one first electrode piece (21) and the at least one second electrode piece (22) in the stacking region are stacked on top of each other; the at least one first electrode piece (21) and the at least one second electrode piece (22) in the stacking region are parallel to a plane in which the bottom panel (11) lies and/or a plane in which the sealing plate (30) lies.

2. The battery according to claim 1, wherein the first connecting wall (621) is perpendicular to the second connecting wall (622);
a height of the first connecting wall (621) is from 1/4 to 1/2 of a height of the housing (10).

3. The battery according to claim 1 or 2, wherein the housing (10) further comprises a skirt-edge (13), the skirt-edge (13) is connected with all of the plurality of side panels (12), and the sealing plate (30) is connected with the skirt-edge (13) by welding; a hot-melting depth for welding the skirt-edge (13) and the sealing plate (30) is less than or equal to a thickness of the skirt-edge (13).

4. The battery according to claim 1, wherein a polarity of the at least one first electrode piece (21) is opposite to that of the at least one second electrode piece (22), the battery cell (20) is provided with a stacking region, and the at least one first electrode piece (21) and the at least one second electrode piece (22) in the stacking region are stacked on top of each other; the at least one first electrode piece (21) and the at least one second electrode piece (22) in the stacking region are parallel to a plane in which the bottom panel (11) lies and/or a plane in which the sealing plate (30) lies;
a separator is further disposed between the at least one first electrode piece (21) and the at least one second electrode piece (22).

5. The battery according to claim 1 or 2, wherein the first tab is electrically connected to the at least one first electrode piece (21) through the cell position-limiting face (23), and the second tab is electrically connected to the at least one second electrode piece (22) through the cell position-limiting face (23);
an insulating member is disposed between the first tab and the installation wall (70), and an insulating member is disposed between the second tab and the installation wall (70), and a through hole is formed in the installation wall (70); the connecting member (90) extends to an outside of the installation wall (70) through the through hole, and the connecting member (90) and the installation wall (70) are insulated from each other.

6. The battery according to claim 1 or 2, wherein both the housing (10) and the sealing plate (30) are made of metal, and a thickness of a panel used for the housing (10) and the sealing plate (30) is 10µm to 150µm;
the housing (10) is formed by stamping.

7. The battery according to claim 1 or 2, wherein the connecting member (90) comprises a connecting sheet and a connecting post which are electrically connected with each other, the connecting sheet is fixedly connected to the housing (10) through an insulating adhesive layer, and the connecting post and the housing (10) are insulated from each other through at least two insulating pads; the connecting post extends to an outside of the housing (10) through the through hole.

8. The battery according to claim 1 or 2, wherein a liquid injection hole (16) is further formed in the position-limiting structure (50) and the liquid injection hole (16) is communicated with the accommodation space (15).

9. An electronic product, comprising the battery according to any one of claims 1 to 8.

## Patentansprüche

1. Batterie, **dadurch gekennzeichnet, dass** sie ein Gehäuse (10), eine Batteriezelle (20) und eine Dichtungsplatte (30) umfasst, wobei das Gehäuse (10) eine hohle Struktur mit einer Öffnung (14) an einer Seite des Gehäuses (10) ist und die Dichtungsplatte (30) auf abdichtende Weise mit der Öffnung (14) verbunden ist; die Batteriezelle (20) in einem Aufnahmeraum (15) zwischen dem Gehäuse (10) und der Dichtungsplatte (30) aufgenommen ist und mindestens ein Ende der Batteriezelle (20) eine Zellposition-Begrenzungsfläche (23); mindestens eine Seite des Gehäuses (10) mit einer Positionsbegrenzungsstruktur (50) versehen ist, wobei die Zellposition-Begrenzungsfläche (23) an der Positionsbegrenzungsstruktur (50) anliegt, um ein Rütteln der Batteriezelle (20) zu vermeiden; ein Verbindungselement (90) ferner in dem Aufnahmeraum (15) angeordnet ist und das Verbindungselement (90) und das Gehäuse (10) voneinander isoliert sind;
die Batteriezelle (20) mindestens ein erstes Elektrodenstück (21) und mindestens ein zweites Elektrodenstück (22) umfasst, ein erster Anschlussstreifen mit dem mindestens einen ersten Elektrodenstück (21) verbunden ist, ein zweiter Anschlussstreifen mit dem mindestens einen zweiten Elektrodenstück (22) verbunden ist, der erste Anschlussstreifen elektrisch mit dem Gehäuse (10) verbunden ist, der zweite Anschlussstreifen elektrisch mit dem Verbindungselement (90) verbunden ist und sich das Verbindungselement (90) durch ein Durchgangsloch in dem Gehäuse (10) zu einer Außenseite des Gehäuses (10) erstreckt;
wobei das Gehäuse (10) eine Bodentafel (11) und eine Vielzahl von Seitentafeln (12) umfasst, die auf eine Weise Ende-an-Ende miteinander verbunden sind, wobei die Vielzahl von Seitentafeln (12) alle mit einem Rand der Bodentafel (11) verbunden sind und mindestens eine der Seitentafeln (12) mit der Positionsbegrenzungsstruktur (50) versehen ist;
wobei die Positionsbegrenzungsstruktur (50) eine Positionsbegrenzungswand (60) und eine mit der Positionsbegrenzungswand (60) verbundene Installationswand (70) umfasst, die Positionsbegrenzungswand (60) mit einem Rand der Bodentafel (11) verbunden ist und sich die Installationswand (70) zu der Öffnung (14) erstreckt, die Positionsbegrenzungswand (60) eine erste geneigte Wand (61) ist oder die Positionsbegrenzungswand (60) eine gebogene Wand (62) ist;
wobei an der Installationswand (70) eine Verstärkung (40) angeordnet ist, um eine lokale mechanische Festigkeit des Gehäuses (10) zu erhöhen, der erste Anschlussstreifen elektrisch mit der Verstärkung (40) verbunden ist;
wobei ein Ende der ersten geneigten Wand (61) mit dem Rand der Bodentafel (11) verbunden ist und das andere Ende der ersten geneigten Wand (61) in eine von der Mitte des Gehäuses (10) weg weisende Richtung geneigt ist und mit der Installationswand (70) verbunden ist; die Zellposition-Begrenzungsfläche (23) an der ersten geneigten Wand (61) an liegt; in einem Winkel von 20° bis 80° in Bezug auf eine Mittelachse des Gehäuses (10) geneigt ist;
wobei die gebogene Wand (62) eine erste Verbindungswand (621) und eine zweite Verbindungswand (622) umfasst, die miteinander verbunden sind, und zwischen der ersten Verbindungswand (621) und der zweiten Verbindungswand (622) ein eingeschlossener Winkel gebildet ist; die erste Verbindungswand (621) mit dem Rand der Bodentafel (11) verbunden ist, und sich die zweite Verbindungswand (622) in eine von der Mitte des Gehäuses (10) weg weisende Richtung erstreckt und mit der Installationswand (70) verbunden ist;
die Zellposition-Begrenzungsfläche (23) an einer Innenwand der ersten Verbindungswand (621) an liegt;
wobei die Batteriezelle (20) mit einem Stapelbereich versehen ist und das mindestens eine erste Elektrodenstück (21) und das mindestens eine zweite Elektrodenstück (22) in dem Stapelbereich übereinander gestapelt sind; das mindestens eine erste Elektrodenstück (21) und das mindestens eine zweite Elektrodenstück (22) in dem Stapelbereich parallel zu einer Ebene, in der die Bodentafel (11) liegt, und/oder einer Ebene, in der die Dichtungsplatte (30) liegt, sind.

2. Batterie nach Anspruch 1, wobei die erste Verbindungswand (621) senkrecht zu der zweiten Verbindungswand (622) ist;
eine Höhe der ersten Verbindungswand (621) 1/4 bis 1/2 einer Höhe des Gehäuses (10) ist.

3. Batterie nach Anspruch 1 oder 2, wobei das Gehäuse (10) ferner einen Schürzenrand (13) umfasst, der Schürzenrand (13) mit allen der Vielzahl von Seitenwänden (12) verbunden ist und die Dichtungsplatte (30) durch Schweißen mit dem Schürzenrand (13) verbunden ist; eine Heißschmelztiefe zum Verschweißen des Schürzenrands (13) und der Dichtungsplatte (30) kleiner als oder gleich wie eine Stärke des Schürzenrands (13) ist.

4. Batterie nach Anspruch 1, wobei eine Polarität des mindestens einen ersten Elektrodenstücks (21) jener des mindestens einen zweiten Elektrodenstücks (22) entgegengesetzt ist, die Batteriezelle (20) mit einem Stapelbereich versehen ist und das mindestens eine erste Elektrodenstück (21) und das mindestens eine zweite Elektrodenstück (22) in dem Stapelbereich übereinander gestapelt sind; das mindestens eine erste Elektrodenstück (21) und das mindestens eine zweite Elektrodenstück (22) in dem Stapelbereich parallel zu einer Ebene sind, in der die Bodentafel (11) liegt, und/oder einer Ebene, in der die Dichtungsplatte (30) liegt;
ein Trennelement ferner zwischen dem mindestens einen ersten Elektrodenstück (21) und dem mindestens einen zweiten Elektrodenstück (22) angeordnet ist.

5. Batterie nach Anspruch 1 oder 2, wobei der erste Anschlussstreifen durch die Zellposition-Begrenzungsfläche (23) elektrisch mit dem mindestens einen ersten Elektrodenstück (21) verbunden ist und der zweite Anschlussstreifen durch die Zellposition-Begrenzungsfläche (23) elektrisch mit dem mindestens einen zweiten Elektrodenstück (22) verbunden ist;
ein Isolierelement zwischen dem ersten Anschlussstreifen und der Installationswand (70) angeordnet ist und ein Isolierglied zwischen dem zweiten Anschlussstreifen und der Installationswand (70) Isolierelement ist, und in der Installationswand (70) ein Durchgangsloch gebildet ist; sich das Verbindungselement (90) durch das Durchgangsloch zu einer Außenseite der Installationswand (70) erstreckt und das Verbindungselement (90) und die Installationswand (70) voneinander isoliert sind.

6. Batterie nach Anspruch 1 oder 2, wobei sowohl das Gehäuse (10) als auch die Dichtungsplatte (30) aus Metall gefertigt sind und eine Stärke einer für das Gehäuse (10) und die Dichtungsplatte (30) verwendeten Platte 10 µm bis 150 µm ist;
das Gehäuse (10) durch Stanzen gebildet ist.

7. Batterie nach Anspruch 1 oder 2, wobei das Verbindungselement (90) ein Verbindungblech und einen Verbindungsstift umfasst, die elektrisch miteinander verbunden sind, das Verbindungblech durch eine isolierende Klebeschicht fest mit dem Gehäuse (10) verbunden ist und der Verbindungsstift und das Gehäuse (10) durch mindestens zwei Isolierpads voneinander isoliert sind; sich der Verbindungsstift durch das Durchgangsloch zu einer Außenseite des Gehäuses (10) erstreckt.

8. Batterie nach Anspruch 1 oder 2, wobei in der Positionsbegrenzungsstruktur (50) ferner ein Flüssigkeitsinjektionsloch (16) gebildet ist und das Flüssigkeitsinjektionsloch (16) mit dem Aufnahmeraum (15) in Verbindung ist.

9. Elektronisches Produkt, umfassend die Batterie nach einem der Ansprüche 1 bis 8.

## Revendications

1. Batterie, **caractérisée en ce qu'**elle comprend un boîtier (10), un élément de batterie (20) et une plaque d'étanchéité (30), dans laquelle le boîtier (10) est une structure creuse comportant une ouverture (14) sur une face du boîtier (10), et la plaque d'étanchéité (30) est reliée à l'ouverture (14) de manière étanche ; l'élément de batterie (20) est logé dans un espace de logement (15) entre le boîtier (10) et la plaque d'étanchéité (30), et au moins une extrémité de l'élément de batterie (20) constitue une face de limitation de position d'élément (23) ; au moins une face du boîtier (10) est pourvue d'une structure de limitation de position (50), la face de limitation de position d'élément (23) vient en butée contre la structure de limitation de position (50) afin d'éviter le mouvement de l'élément de batterie (20) ; un élément de connexion (90) est en outre disposé dans l'espace de logement (15), et l'élément de connexion (90) et le boîtier (10) sont isolés l'un de l'autre ;
l'élément de batterie (20) comprend au moins une première pièce d'électrode (21) et au moins une deuxième pièce d'électrode (22), une première languette est reliée à la au moins une première pièce d'électrode (21), une deuxième languette est reliée à la au moins une deuxième pièce d'électrode (22), la première languette est électriquement reliée au boîtier (10), la deuxième languette est électriquement reliée à l'élément de connexion (90), et l'élément de connexion (90) s'étend vers l'extérieur du boîtier (10) à travers un trou traversant dans le boîtier (10) ;
dans laquelle le boîtier (10) comprend un panneau inférieur (11), et une pluralité de panneaux latéraux (12) qui sont reliés séquentiellement bout à bout, dans laquelle la pluralité de panneaux latéraux (12) sont tous reliés à un bord du panneau inférieur (11), et au moins l'un des panneaux latéraux (12) est pourvu de la structure de limitation de position (50) ;
dans laquelle la structure de limitation de position (50) comprend une paroi de limitation de position (60) et une paroi d'installation (70) reliée à la paroi de limitation de position (60), la paroi de limitation de position (60) est reliée à un bord du panneau inférieur (11), et la paroi d'installation (70) s'étend jusqu'à l'ouverture (14), la paroi de limitation de position (60) est une première paroi inclinée (61) ou la paroi de limitation de position (60) est une paroi coudée (62) ;
dans laquelle un renfort (40) est disposé sur la paroi d'installation (70) afin d'augmenter la résistance mécanique locale du boîtier (10), la première languette est électriquement reliée au renfort (40) ;
dans laquelle une extrémité de la première paroi inclinée (61) est reliée au bord du panneau inférieur (11), et l'autre extrémité de la première paroi inclinée (61) est inclinée dans une direction s'éloignant du centre du boîtier (10) et est reliée à la paroi d'installation (70) ; la face de limitation de position d'élément (23) vient en butée contre la première paroi inclinée (61) ;
la première paroi inclinée (61) est inclinée selon un angle de 20° à 80° par rapport à un axe central du boîtier (10) ;
dans laquelle la paroi coudée (62) comprend une première paroi de connexion (621) et une deuxième paroi de connexion (622) qui sont reliées l'une à l'autre, et un angle est formé entre la première paroi de connexion (621) et la deuxième paroi de connexion (622) ; la première paroi de connexion (621) est reliée au bord du panneau inférieur (11), et la deuxième paroi de connexion (622) s'étend dans une direction s'éloignant du centre du boîtier (10) et est reliée à la paroi d'installation (70) :
la face de limitation de position d'élément (23) vient en butée contre une paroi interne de la première paroi de connexion (621) ;
dans laquelle l'élément de batterie (20) est pourvu d'une région d'empilement, et la au moins une première pièce d'électrode (21) et la au moins une deuxième pièce d'électrode (22) dans la région d'empilement sont empilées l'une sur l'autre ; la au moins une première pièce d'électrode (21) et la au moins une deuxième pièce d'électrode (22) dans la région d'empilement sont parallèles à un plan dans lequel se trouve le panneau inférieur (11) et/ou à un plan dans lequel se trouve la plaque d'étanchéité (30).

2. Batterie selon la revendication 1, dans laquelle la première paroi de connexion (621) est perpendiculaire à la deuxième paroi de connexion (622) ;
une hauteur de la première paroi de connexion (621) représente de 1/4 à 1/2 de la hauteur du boîtier (10).

3. Batterie selon la revendication 1 ou 2, dans laquelle le boîtier (10) comprend en outre un bord de jupe (13), le bord de jupe (13) est relié à l'ensemble de la pluralité de panneaux latéraux (12), et la plaque d'étanchéité (30) est reliée au bord de jupe (13) par soudage ; une profondeur de soudage par fusion à chaud pour souder le bord de jupe (13) et la plaque d'étanchéité (30) est inférieure ou égale à une épaisseur du bord de jupe (13).

4. Batterie selon la revendication 1, dans laquelle une polarité de la au moins une première pièce d'électrode (21) est opposée à celle de la au moins une deuxième pièce d'électrode (22), l'élément de batterie (20) est pourvu d'une région d'empilement, et la au moins une première pièce d'électrode (21) et la au moins une deuxième pièce d'électrode (22) dans la région d'empilement sont empilées l'une sur l'autre ; la au moins une première pièce d'électrode (21) et la au moins une deuxième pièce d'électrode (22) dans la région d'empilement sont parallèles à un plan dans lequel se trouve le panneau inférieur (11) et/ou à un plan dans lequel se trouve la plaque d'étanchéité (30) ;
un séparateur est en outre disposé entre la au moins une première pièce d'électrode (21) et la au moins une deuxième pièce d'électrode (22).

5. Batterie selon la revendication 1 ou 2, dans laquelle la première languette est électriquement reliée à la au moins une première pièce d'électrode (21) à travers la face de limitation de position d'élément (23), et la deuxième languette est électriquement reliée à la au moins une deuxième pièce d'électrode (22) à travers la face de limitation de position d'élément (23) ;
un élément isolant est disposé entre la première languette et la paroi d'installation (70), et un élément isolant est disposé entre la deuxième languette et la paroi d'installation (70), et un trou traversant est formé dans la paroi d'installation (70) ; l'élément de connexion (90) s'étend vers l'extérieur de la paroi d'installation (70) à travers le trou traversant, et l'élément de connexion (90) et la paroi d'installation (70) sont isolés l'un de l'autre.

6. Batterie selon la revendication 1 ou 2, dans laquelle le boîtier (10) et la plaque d'étanchéité (30) sont tous deux en métal, et une épaisseur d'un panneau utilisé pour le boîtier (10) et la plaque d'étanchéité (30) est de 10 µm à 150 µm ;
le boîtier (10) est formé par emboutissage.

7. Batterie selon la revendication 1 ou 2, dans laquelle l'élément de connexion (90) comprend une feuille de connexion et un plot de connexion qui sont électriquement reliés l'un à l'autre, la feuille de connexion est fixée au boîtier (10) par une couche adhésive isolante, et le plot de connexion et le boîtier (10) sont isolés l'un de l'autre par au moins deux coussinets isolants ; le plot de connexion s'étend vers l'extérieur du boîtier (10) à travers le trou traversant.

8. Batterie selon la revendication 1 ou 2, dans laquelle un orifice d'injection de liquide (16) est en outre formé dans la structure de limitation de position (50) et l'orifice d'injection de liquide (16) communique avec l'espace de logement (15).

9. Produit électronique, comprenant la batterie selon l'une quelconque des revendications 1 à 8.
